# FASCICULE DE BREVET EUROPEEN

(11) **EP 4 285 044 B1**
(45) Date de publication et mention de la délivrance du brevet: **24.12.2025**
(21) Numéro de dépôt: 22702287.8
(22) Date de dépôt: 31.01.2022
(51) Int. Cl.: F16L 11/08, B29D 23/00

(54) **CONDUITE FLEXIBLE DE TRANSPORT DE FLUIDE ET PROCÉDÉ DE FABRICATION ASSOCIÉ**
FLEXIBLES ROHR ZUR FÖRDERUNG EINES FLUIDS UND ZUGEHÖRIGES HERSTELLUNGSVERFAHREN
FLEXIBLE PIPE FOR CONVEYING A FLUID AND ASSOCIATED PRODUCTION METHOD

(30) Priorité: 01.02.2021 FR 2100955
(43) Date de publication de la demande: 06.12.2023
(73) Titulaire: TechnipFMC Subsea France, 92400 Courbevoie (FR)
(72) Inventeur: DEMANZE, Frédéric, 76490 RIVES-EN-SEINE (FR); ESPINASSE, Philippe, 76420 BIHOREL (FR); EPSZTEIN, Thomas, 76000 ROUEN (FR)
(74) Mandataire: Lavoix
(86) Numéro de dépôt international: PCT/EP2022/052192
(87) Numéro de publication internationale: WO 2022/162213

(56) Documents cités:
- EP-A1- 2 364 412
- EP-A1- 2 861 903
- EP-A2- 2 547 944
- WO-A1-2013/152770

## Description

La présente invention concerne une conduite flexible de transport de fluide selon le préambule de la revendication 1.

WO 2013/188812 décrit une conduite du type précité. WO 2013/152770 et WO 2011/115694 décrivent des conduites flexibles sans région métallique de contact appliquée sur la surface externe de la gaine interne.

La conduite flexible est par exemple telle que décrite dans les documents normatifs publiés par l'American Petroleum Institute (API), API 17J, 4ème édition - mai 2014 et API RP 17B, 5ème édition - mars 2014.

De telles conduites flexibles sont notamment utilisées comme lignes de production, d'injection d'eau ou de gaz, d'export de gaz, de service, notamment en mer profonde dans l'industrie pétrolière et gazière ou encore pour le transport et la distribution d'hydrogène produit en mer. Elles s'étendent généralement à travers une étendue d'eau entre une installation de surface et un ensemble de fond, entre deux ensembles de fond ou entre deux installations de surface.

L'installation de surface est par exemple une barge, une plateforme semi-submersible, un FPSO (pour « Floating Production Storage and Offloading », soit ensemble de stockage et de déchargement de production flottant), un FLNG (pour « Floating Liquefied Natural Gas », soit ensemble de liquéfaction de gaz naturel flottant), un FSU (pour « Floating Storage Unit », soit unité de stockage flottant), ou un autre ensemble flottant.

Les conduites flexibles comportent généralement une gaine externe de protection définissant un volume intérieur et au moins une gaine interne imperméable aux liquides disposée à l'intérieur du volume intérieur. La gaine interne est typiquement une gaine de pression délimitant un passage de circulation d'un fluide.

Le fluide transporté par ce type de conduite est, en particulier, un mélange d'hydrocarbures pouvant comporter une forte teneur en gaz corrosifs comme du dioxyde de carbone (CO₂) et/ou du sulfure d'hydrogène (H₂S) ou encore de l'hydrogène en phase liquide ou gazeuse, du dioxyde de carbone de réinjection, de l'ammoniac.

La gaine externe de protection et la gaine interne délimitent entre elles un espace annulaire recevant généralement des couches de renfort.

Les couches de renfort comprennent une voûte de pression formée dans la plupart des cas par un enroulement d'un fil profilé métallique agrafé (« interlocked » en anglais) autour de la gaine de pression. Les couches de renfort comprennent également des nappes d'armures de traction formées par des fils métalliques disposées autour de la voûte de pression, dans l'espace annulaire, pour assurer une bonne résistance à la traction.

La voûte de pression reprend les efforts de pression internes résultant de la pression du fluide circulant dans le passage central de la conduite flexible.

Elle est généralement formée d'au moins un fil de forme enroulé et agrafé autour de la gaine de pression.

Le fil de forme est agrafé, car lors de la fabrication, de l'installation puis du fonctionnement, les spires du fil de forme de la voûte sont susceptibles de se déplacer/se mouvoir et de conduire potentiellement à la formation d'un déjoint important.

Sous l'effet de la pression radiale interne principalement et/ou externe, la gaine de pression est susceptible de fluer dans le déjoint jusqu'à conduire à une perte d'étanchéité de la gaine, voire sa rupture, ce qui provoque dans un cas extrême la ruine de la conduite flexible. L'agrafage est une contre-mesure à cette migration, qui maintient la taille du déjoint sous contrôle.

Les voûtes de pression agrafées présentent donc l'avantage de résister au fluage de la gaine. Cependant, elles ne donnent pas entière satisfaction.

En premier lieu, la fabrication des fils de forme est coûteuse, et nécessite des aciers à caractéristiques moyennes, qui augmentent le coût.

Par ailleurs, le rayon de courbure de la voûte agrafée est limité, pour éviter de désagrafer la voûte. Ceci réduit donc globalement le rayon de courbure minimal admissible pour la conduite (« MBR » ou « Minimum Bending Radius »).

Il est également suspecté que les voûtes agrafées conduisent à une étanchéité qui crée un espace confiné entre la gaine de pression et la voûte de pression. Cet espace est propice à l'accumulation de gaz corrosifs provenant du fluide circulant dans la conduite et ayant migrés par perméabilité à travers la gaine de pression, ce qui peut conduire à une corrosion accélérée de la voûte.

Pour pallier ce problème, WO2013/152770 décrit une voûte de pression formée de fils non agrafés. Les fils non agrafés sont maintenus à distance les uns des autres par des entretoises en polymère qui sont disposées sur la surface externe de la gaine de pression, avec interposition d'une couche anti-usure entre l'entretoise et la couche de polymère.

Une telle structure évite l'agrafage de la voûte, mais conduit néanmoins dans certains cas à des désorganisations locales, les entretoises étant susceptibles de glisser sur la couche anti-usure par rapport à la surface externe de la gaine interne et donc de se déplacer en engendrant des désorganisations locales du fil non agrafé.

Un but de l'invention est de fournir une conduite flexible de transport de fluide qui présente une bonne résistance à la pression interne, qui soit simple et moins onéreuse à fabriquer, tout en garantissant une tenue adéquate de la voûte de pression, lors de la fabrication, de l'installation, et de l'utilisation.

À cet effet, l'invention a pour objet une conduite flexible selon la revendication 1.

La conduite flexible selon l'invention peut comprendre l'une ou plusieurs des caractéristiques des revendications 2 à 11. Des modes de réalisations avantageux de la conduite flexible de l'invention sont définis par les revendications 2 à 11. Il est également décrit dans la description qu'il est également possible que :
- la structure de voûte de pression est dépourvue d'élément enroulé agrafé, notamment de fil agrafé ou de feuillard agrafé ;
- le bord interne de la région métallique appliqué sur la surface externe de la gaine interne s'étend parallèlement à l'axe central sur plus de 10% de la largeur d'une spire du fil de voûte, prise parallèlement à l'axe central entre les faces latérales du fil de voûte ;
- le ou chaque fil de voûte est réalisé par laminage à chaud ; et
- l'ensemble d'indexation comporte au moins une butée d'indexation formée dans la gaine interne ou/et au moins un logement d'indexation formé dans la gaine interne, la butée d'indexation ou/et le logement d'indexation coopérant avec la structure de voûte de pression pour indexer la position axiale de chaque spire du fil de voûte le long de l'axe central, en maintenant un interstice entre chaque paire de spires adjacentes du fil de voûte.

L'invention a également pour objet un procédé de fabrication selon la revendication 12.

Le procédé selon l'invention peut comprendre l'une ou plusieurs des caractéristiques des revendications 13 ou 14.

La description porte également sur une conduite flexible de transport de fluide, comportant :
- une gaine interne, délimitant intérieurement un passage de circulation de fluide, et une surface externe, le passage de circulation de fluide définissant un axe central;
- une structure de voûte de pression, disposée autour de la gaine interne, comportant au moins un fil de voûte métallique enroulé à pas court formant une pluralité de spires successives autour de la surface externe, le ou chaque fil de voûte enroulé étant non agrafé ;
- au moins une nappe d'armures de traction, enroulée autour de la structure de voûte de pression ;

caractérisée en ce que la structure de voûte de pression comporte au moins une couche intermédiaire, interposée entre le ou chaque fil de voûte enroulé et la gaine interne, la couche intermédiaire définissant une région de contact appliquée sur la surface externe,
et en ce que la conduite flexible comporte un ensemble d'indexation de la position axiale de chaque spire le long de l'axe central, propre à maintenir un interstice entre chaque paire de spires adjacentes, l'ensemble d'indexation comportant au moins une saillie d'indexation formée sur ou portée par la couche intermédiaire, la saillie d'indexation étant insérée dans la gaine interne.

La structure de voûte de pression ne comprend alors pas nécessairement au moins une région métallique de contact appliquée sur la surface externe de la gaine interne, la région de contact présentant, en section dans au moins un plan axial médian passant par l'axe central, un bord interne parallèle à l'axe central.

La région de contact appliquée sur la surface externe peut présenter un bord parallèle à l'axe central en section dans un plan axial médian appliqué sur la surface externe, mais elle n'est pas nécessairement une région métallique.

Par exemple, la couche intermédiaire est réalisée en polymère notamment en polyétheréthercétone (PEEK).

La conduite flexible ainsi définie peut comprendre l'une ou plusieurs des caractéristiques ci-dessus, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- [Fig. 1] la figure 1 est une vue en perspective partiellement écorchée d'un tronçon central d'une première conduite flexible selon l'invention ;
- [Fig. 2] la figure 2 est une vue partielle en coupe suivant un plan axial médian de la voûte de pression de la première conduite flexible selon l'invention ;
- [Fig. 3] la figure 3 est une vue d'une variante de voûte de pression ;
- [Fig. 4] [Fig. 5] [Fig. 6] [Fig. 7] [Fig. 8] [Fig. 9] [Fig. 10] [Fig.11] les figures 4 à 11 sont des vues analogues à la figure 2 d'autres variantes de voûte de pression, comprenant une couche intermédiaire entre le fil de forme et la surface externe de la gaine interne ;
- [Fig. 12] la figure 12 est une vue d'une autre variante de voûte de pression, ne faisant pas partie de l'invention.
- [Fig. 13] la figure 13 est une courbe illustrant schématiquement la force de frottement de chaque spire d'un fil de voûte sur la gaine interne en fonction du temps, pour la voûte de pression de la figure 12.

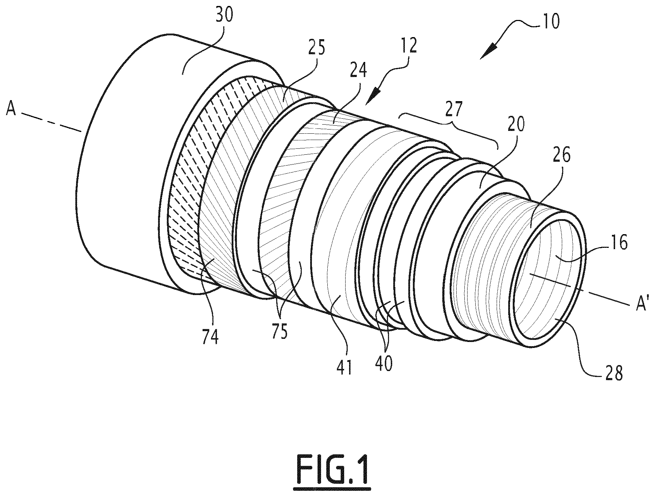

Une première conduite flexible 10 selon l'invention est illustrée partiellement par la figure 1.

La conduite flexible 10 comporte un tronçon central 12. Elle comporte, à chacune des extrémités axiales du tronçon central 12, un embout d'extrémité (non visible).

En référence à la figure 1, la conduite 10 délimite un passage central 16 de circulation d'un fluide, avantageusement d'un fluide pétrolier. Le passage central 16 s'étend suivant un axe longitudinal central A-A', entre l'extrémité amont et l'extrémité aval de la conduite 10.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 50 m et 4000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches ou structures adjacentes de la conduite flexible 10 sont libres de se déplacer longitudinalement l'une par rapport à l'autre lors d'une flexion de la conduite. Avantageusement, toutes les couches ou structures de la conduite flexible sont libres de se déplacer l'une par rapport à l'autre.

Une telle conduite est par exemple décrite dans les documents normatifs publiés par l'American Petroleum Institute (API), API 17J, 4ème édition - mai 2014 et API RP 17B, 5ème édition - mars 2014.

Par ailleurs, dans tout ce qui suit, les termes « extérieur », « externe », « interne » et « intérieur » s'entendent généralement de manière radiale par rapport à l'axe central A-A' de la conduite, les termes « extérieur » ou « externe » s'entendant comme relativement plus éloigné radialement de l'axe A-A' et les termes « interne » ou « intérieur » s'étendant comme relativement plus proche radialement de l'axe A-A' de la conduite.

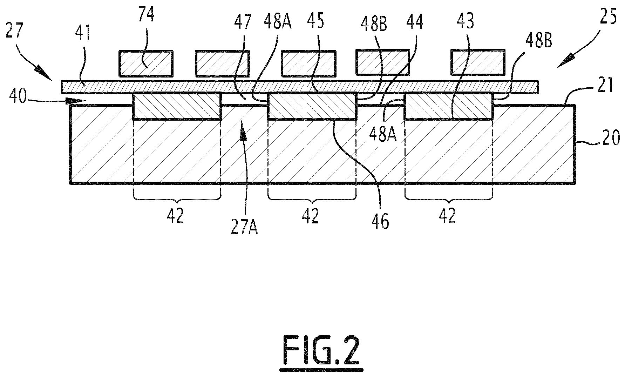

Comme illustré par les figures 1 et 2, la conduite 10 délimite une pluralité de couches concentriques autour de l'axe A-A', qui s'étendent continûment le long du tronçon central 12 jusqu'aux embouts situés aux extrémités de la conduite (non représentés).

Selon l'invention, la conduite 10 comporte au moins une gaine interne tubulaire 20 à base de matériau polymère, constituant avantageusement une gaine de pression.

La conduite 10 comporte en outre au moins une couche d'armures de traction 24, 25 disposée extérieurement par rapport à la gaine de pression 20.

La conduite 10 comporte en outre éventuellement une carcasse interne 26 disposée à l'intérieur de la gaine de pression 20.

La conduite 10 comporte une structure de voûte de pression 27 intercalée entre la gaine de pression 20 et la ou les couches d'armures de traction 24, 25, et un ensemble d'indexation 27A de la structure de voûte de pression 27 par rapport à la gaine de pression 20 (visible sur la figure 2).

La conduite 10 comprend également une gaine extérieure 30, destinée à la protection de la conduite 10.

De manière connue, la gaine de pression 20 est destinée à confiner de manière étanche le fluide transporté dans le passage 16. La gaine de pression 20 est avantageusement formée en matériau polymère. Le polymère est par exemple à base d'une polyoléfine telle que du polyéthylène ou du polypropylène, à base d'un polyamide tel que du PA11 ou du PA12, ou à base d'un polymère fluoré tel que du polyfluorure de vinylidène (PVDF) ou une composition comprenant d'une part un homopolymère de polyfluorure de vinylidène (PVDF) et, un copolymère de fluorure de vinylidène (VDF) et d'un comonomère fluoré tel que du hexafluoropropylène (HFP) ou du chlorotrifluoroethylène (CTFE).

En variante, la gaine de pression 20 est formée à base d'un polymère haute performance tel qu'un polyaryléthercétone (PAEK) tel que le polyéthercétone (PEK), le polyétheréthercétone (PEEK), le polyétheréthercétonecétone (PEEKK), le polyéthercétonecétone (PEKK) ou le polyéthercétoneéthercétonecétone (PEKEKK), le polyamide-imide (PAl), le polyéther-imide (PEI), le polysulfone (PSU), le polyphénylsulfone (PPSU), le polyéthersulfone (PES) , le polyarylsulfone (PAS), le polyphénylèneéther (PPE), le polysulfure de phénylène (PPS) les polymères à cristaux liquides (LCP), le polyphtalamide (PPA), les dérivés fluorés tels que le polytétrafluoroéthylène (PTFE), le perfluoropolyéther (PFPE), le perfluoroalkoxy (PFA) ou l'éthylène chlorotrifloroethylène (ECTFE) et/ou leurs mélanges.

L'épaisseur de la gaine de pression 20 est par exemple comprise entre 5 mm et 20 mm.

La gaine de pression 20 définit une surface périphérique externe 21 (voir figure 2) présentant une enveloppe cylindrique d'axe A-A'.

La carcasse 26, lorsqu'elle est présente, est formée d'un feuillard métallique profilé 28, enroulé en hélice. Les spires successives du feuillard sont agrafées les unes aux autres.

La fonction principale de la carcasse 26 est de reprendre les efforts radiaux d'écrasement. Les efforts radiaux d'écrasement sont par exemple engendrés par la pression hydrostatique de l'étendue d'eau ou par les équipements de pose pendant l'installation de la conduite.

La carcasse 26 est disposée à l'intérieur de la gaine de pression 20. Elle est propre à entrer en contact avec le fluide circulant dans la gaine de pression 20.

La conduite flexible 10 est alors désignée par le terme anglais « rough bore » en raison de la géométrie de la carcasse 26.

En variante (non représentée), la conduite flexible 10 est dépourvue de carcasse interne, elle est alors désignée par le terme anglais « smooth bore ».

En référence à la figure 2, la structure de voûte de pression 27 est destinée à reprendre les efforts liés à la pression régnant à l'intérieur de la gaine de pression 20. Elle comporte au moins un fil de voûte métallique 40 enroulé en hélice d'axe A-A' autour de la gaine de pression 20 et, avantageusement, une bande 41 de contrôle du fluage de la gaine de pression 20 au niveau du fil de voûte 40.

Le fil de voûte 40 est enroulé en hélice à pas court autour de la gaine de pression 20, c'est-à-dire avec un angle d'hélice de valeur absolue proche de 90° par rapport à l'axe A-A', typiquement compris entre 75° et 90°.

Le matériau métallique formant le fil de voûte 40 est choisi parmi un acier au carbone, notamment choisi parmi les grades d'acier au carbone comprenant entre 0,1% et 0,8% de carbone. Lors des applications en milieu particulièrement corrosif, le matériau métallique est choisi parmi les aciers alliés. A titre d'exemple, le choix peut se porter sur les aciers inoxydables et en particulier, les duplex voire les superduplex.

Le fil de voûte 40 est non agrafé. Il comporte une pluralité de spires 42 non agrafées les unes par rapport aux autres. Chaque spire 42 correspond à un enroulement de 360° autour de l'axe A-A'.

Par « non agrafé », on entend que les spires successives 42 du fil de voûte 40 sont disjointes, en étant placées à l'écart les unes des autres. Elles définissent entre elles un interstice 47, au moins dans certaines configurations de la conduite flexible 10, notamment lorsque la conduite flexible 10 est maintenue droite.

Dans cette configuration, l'interstice 47 présente par exemple une largeur, prise le long de l'axe A-A', supérieure ou égal à 5% de la largeur de chaque section transversale du fil de voûte 40, prise le long de l'axe A-A'. Cette largeur apporte ainsi de la flexibilité. Elle est de préférence inférieure à 15% de la largeur de chaque section transversale du fil de voûte 40, prise le long de l'axe A-A', afin de conserver de la performance mécanique.

Le fil de voûte 40 présente une face interne 43 métallique placée au contact de la surface externe 21 de la gaine de pression 20. Il présente une face externe 45 opposée à la face interne 43 et deux faces latérales 48A, 48B raccordant la face interne 43 à la face externe 45.

En section dans chaque plan axial médian passant par l'axe A-A', la face interne 43 délimite un bord interne d'une région métallique de la structure de voûte de pression 27 appliquée sur la surface externe 21 de la gaine de pression 20. Ce bord interne s'étend parallèlement à l'axe A-A', au contact de la surface externe 21.

La région métallique est ainsi inscrite sur une surface cylindrique d'axe A-A'.

Chaque spire 42 du fil de voûte 40 présente, en section transversale dans un plan axial médian passant par l'axe A-A', un contour polygonal, ici de forme rectangulaire allongée le long de l'axe A-A'. En variante, le contour est trapézoïdal ou losange. Le contour polygonal présente dans certains cas des sommets arrondis.

Dans l'exemple de la figure 2, l'ensemble d'indexation 27A comporte au moins une nervure 44 de forme hélicoïdale, formée dans la gaine de pression 20, la nervure 44 délimitant un logement hélicoïdal 46 recevant les spires 42 du fil de voûte 40. La nervure hélicoïdale 44 fait saillie dans l'interstice 47 entre deux spires successives 42 du fil de voûte 40.

Les faces latérales 48A, 48B de chaque spire 42 du fil de voûte sont disposées en butée contre la nervure 44, sur des faces opposées de la nervure 44.

Ainsi, la position de chaque spire 42 du fil de voûte 40 est indexée le long de l'axe A-A', ce qui empêche un déplacement axial de chaque spire 42 le long de l'axe A-A', et donc une désorganisation de la structure de voûte de pression 27.

Le fil de voûte 40 présente en outre une région métallique appliquée contre la surface externe 21 de la gaine de pression 20, évitant un glissement par rapport à la surface externe 21.

Ainsi, le maintien du ou de chaque fil de voûte 40 est assuré de manière très efficace en cas de surpression dans la gaine de pression 20, et le risque de désorganisation de la structure de voûte 27 est fortement diminué.

Avantageusement, les nervures 44 et les logements 46 sont réalisés par indentation du fil de voûte 40 dans la gaine de pression 20, lors de l'enroulement du fil de voûte 40 autour de la gaine de pression 20. L'indentation est par exemple réalisée en chauffant préalablement le fil de voûte 40, par exemple par chauffage par induction, à une température inférieure ou supérieure au point de fusion du polymère de la gaine de pression 20. Le fil de voûte 40 est par exemple chauffé à une température telle que la région appliquée sur la surface externe 21 de la gaine de pression 20 se trouve avantageusement à une température comprise entre +/- 50°C du point de fusion du polymère formant la gaine de pression 20.

En variante, l'indentation est réalisée par application d'une tension sur le fil de voûte 40, conduisant à un frettage autour de la gaine de pression 20, associée à un chauffage simultané ou/et postérieur de la gaine de pression 20 autorisant un fluage de polymère dans l'interstice 47.

Dans une autre variante, le fil de voûte 40 à température ambiante est posé sur la gaine de pression 20 préalablement chauffée à une température supérieure à 50°C et avantageusement inférieure à la température de fusion du polymère.

Dans encore une autre variante, la nervure 44 réalisée par rainurage de la gaine 20 pour ménager le logement hélicoïdal 46, par exemple lors de l'extrusion de la gaine de pression 20, ou postérieurement à cette extrusion, pour poser le fil de voûte 40 dans le logement 46 ainsi créé.

La hauteur de la nervure 44 est notamment supérieure à 1 % de l'épaisseur de la gaine de pression 20, prise perpendiculairement à l'axe central A-A', en particulier comprise entre 5% et 15 % de l'épaisseur de la gaine de pression 20.

La hauteur de la nervure 44, prise perpendiculairement à l'axe A-A' depuis la face interne 43 du fil de voûte 40 est par exemple supérieure à 0,3 mm, et est notamment comprise entre 0,5 mm et 2,0 mm, notamment entre 0,5 mm et 1 mm.

La bande 41, lorsqu'elle est présente, est constituée par un enroulement en hélice d'axe A-A' d'un ruban, avantageusement de section transversale rectangulaire, autour du fil de voûte 40 de la structure de voûte de pression 27. L'enroulement est à pas court autour de l'axe A-A' de la conduite flexible 10, c'est-à-dire avec un angle d'hélice de valeur absolue proche de 90° par rapport à l'axe A-A', typiquement compris entre 75° et 90°.

Lors de l'enroulement de la bande 41, les spires de la bande peuvent être posées avec recouvrement ou sans recouvrement c'est-à-dire jointives par leur bord latéral. Avantageusement, les spires de la bande 41 sont posées avec un recouvrement compris entre 20% et 70% de la largeur de la bande, de préférence avec un recouvrement de 50% de la largeur de la bande.

L'épaisseur de la bande 41, prise perpendiculairement à l'axe A-A', est avantageusement inférieure à la hauteur du fil de voûte 40, prise perpendiculairement à l'axe A-A' entre les faces 43, 45.

La bande 41 est par exemple réalisée à partir d'une bande polymérique tissée ou non tissée. A titre d'exemple, on peut citer des bandes tissées en polyester ou des bandes polymères en polyoléfine type polyéthylène ou polypropylène. Les bandes peuvent être soudées entre elles pour former une gaine continue de préférence non étanche ou proprement supportée mécaniquement.

Dans un mode de réalisation, la bande 41 étant enroulée sous tension, elle s'insère partiellement dans l'interstice 47 entre les spires 42 du fil de voûte 40. L'ensemble d'indexation 27A comporte alors également la bande 41, puisque la région de la bande 41 insérée dans l'interstice 47 participe au blocage axial des spires 42, engendrant une indexation axiale des spires 42.

La conduite flexible 10 selon l'invention comprend au moins une couche d'armures 24, 25 formée d'un enroulement hélicoïdal d'au moins un élément d'armure 74 allongé.

Dans l'exemple représenté sur la figure 1, la conduite flexible 10 comporte une pluralité de couches d'armures 24, 25, notamment une couche d'armures intérieure 24, appliquée sur la structure de voûte de pression 27 (sur le fil de voûte 40 ou sur la bande 41, lorsque la bande 41 est présente), et une couche d'armures extérieure 25 autour de laquelle est disposée la gaine extérieure 30.

Chaque couche d'armures 24, 25 comporte des éléments d'armure 74 longitudinaux enroulés à pas long autour de l'axe A-A' de la conduite.

Par « enroulé à pas long », on entend que la valeur absolue de l'angle d'hélice par rapport à l'axe A-A' est inférieure à 60°, et est typiquement comprise entre 10° et 60°, notamment entre 25° et 55°.

Les éléments d'armure 74 d'une première couche 24 sont enroulés généralement suivant un angle opposé par rapport aux éléments d'armure 74 d'une deuxième couche 25. Ainsi, si l'angle d'enroulement des éléments d'armure 74 de la première couche 24 est égal à +α, α étant compris entre 10° et 60°, l'angle d'enroulement des éléments d'armure 74 de la deuxième couche d'armures 25 disposée au contact de la première couche d'armures 24 est par exemple égal à - α°.

Les éléments d'armure 74 sont par exemple formés par des fils métalliques, notamment des fils en acier, ou par des rubans en matériau composite, par exemple des rubans renforcés de fibres de carbone.

Le matériau métallique formant les éléments d'armure 74 est choisi avantageusement parmi un acier au carbone, notamment choisi parmi les grades d'acier au carbone comprenant entre 0,1% et 0,8% de carbone. Lors des applications en milieu particulièrement corrosif, le matériau métallique est choisi parmi les aciers inoxydables tels que les aciers duplex.

Dans cet exemple, chaque couche d'armures de traction 24, 25 repose avantageusement sur au moins une bande anti-usure 75, visible sur la figure 1. La bande anti-usure 75 est par exemple réalisée en plastique, notamment à base d'un polyamide, d'un polyfluorure de vinylidène (PVDF), d'un polyphénylsulfone (PPSU) ou encore d'un polyétheréthercétone (PEEK). Elle présente une épaisseur inférieure à l'épaisseur de chaque gaine interne ou externe.

Avantageusement, un ruban de maintien tel qu'une bande en aramide à résistance mécanique élevée (Technora^{®} ou Kevlar^{®}) est enroulé autour de la deuxième couche d'armures de traction 25 la plus à l'extérieur par rapport à l'axe A-A', pour assurer un maintien mécanique des couches d'armures de traction 24, 25. Alternativement, les fibres d'aramide sont remplacées par des fibres de verre, des fibres de carbone ou des fibres de basalte.

La gaine extérieure 30 est destinée à empêcher la pénétration de fluide depuis l'extérieur de la conduite flexible 10 vers l'intérieur, dans l'espace annulaire entre la gaine de pression 20 et la gaine extérieure 30. Elle est avantageusement réalisée en matériau polymère, notamment à base d'un polyoléfine, tel que du polyéthylène, ou à base d'un polyamide, tel que du PA11 ou du PA12, ou encore à base d'un élastomère thermoplastique.

L'épaisseur de la gaine extérieure 30 est par exemple comprise entre 5 mm et 15 mm.

La fabrication de la conduite flexible 10 selon l'invention va maintenant être décrite.

Initialement, la gaine de pression 20 est fournie, par exemple en étant extrudée.

Dans un premier mode de réalisation, comme indiqué plus haut, un fil de voûte 40 est préalablement chauffé, en particulier par induction, à une température de la face interne 43 inférieure au point de fusion du polymère sur lequel est appliqué le fil de voûte 40, avantageusement proche du point de fusion.

Plus généralement, le fil de voûte 40 est chauffé à une température telle que la région appliquée sur la surface externe 21 de la gaine de pression 20 se trouve avantageusement à une température comprise entre +/- 50°C du point de fusion du polymère formant la gaine de pression 20, notamment inférieur de l'ordre de 50°C du point de fusion du polymère formant la gaine de pression 20.

En variante ou en complément, la surface externe 21 de la gaine de pression 20 est également chauffée. Ce chauffage est par exemple réalisé par rayonnement infrarouge.

Puis, le fil de voûte 40 est enroulé à pas court autour de la gaine de pression 20. Lors de cet enroulement, le fil de voûte 40 s'indente dans la surface externe 21 de la gaine de pression 20 et ménage dans la gaine de pression 20, le logement hélicoïdal 46, et de part et d'autre du logement hélicoïdal 46, la nervure hélicoïdale 44 séparant les spires 42 successives du fil de voûte 40.

Dans une variante, le fil de voûte 40 n'est pas chauffé préalablement. Le fil de voûte 40 est posé à température ambiante, en appliquant une tension conduisant à un frettage. Le polymère se trouve alors en compression en regard de la face interne 43 du fil de voûte 40. Simultanément ou/et postérieurement, la surface externe 21 de la gaine de pression 20 est chauffée, par exemple par le passage central 16 de la conduite 10, par passage d'un fluide (liquide ou air) chauffé ou par insertion d'un mandrin chauffant (voir par exemple WO2016/169987). Ceci provoque un fluage du polymère dans les interstices 47 entre les spires 42 du fil de voûte 40 pour former les nervures 44 et le logement 46.

Dans une autre variante, le fil de voûte 40 à température ambiante est posé sur la gaine de pression 20 préalablement chauffée à une température supérieure à 50°C et avantageusement inférieure à la température de fusion du polymère.

Dans encore une variante, la surface externe 21 de la gaine de pression est rainurée pour former la nervure 44 et le logement 46, avant la mise en place du fil de voûte 40. Ceci est effectué par exemple en sortie de la tête d'extrusion, ou juste avant l'enroulement en spirale du fil de voûte 40.

Le fil de voûte 40 est posé en séparant les spires 42 avec un pas adapté pour obtenir un allongement global de la structure de voûte de pression 27 d'au moins 2%, de préférence d'au moins 4% et avantageusement d'au moins 6%.

Ensuite, un ruban est enroulé autour du fil de voûte 40, pour former une bande 41 qui bloque le fluage du polymère de la gaine de pression 20, pour que le polymère reste en-deçà de la bande 41.

Le couple polymère/fil de voûte est sélectionné pour que la hauteur de fluage en fonctionnement soit inférieure à la hauteur du fil de voûte 40.

En outre, comme précisé plus haut, une région de la bande 41 s'insère avantageusement dans l'interstice 47 et participe au blocage axial des spires 42, engendrant une indexation axiale des spires 42.

Les couches d'armures 24, 25 sont alors mises en place et la gaine extérieure 30 est fournie autour des couches d'armures 24, 25, par exemple par extrusion.

En utilisation, en cas d'augmentation de pression dans la gaine de pression 20, le ou chaque fil de voûte 40 enroulé s'oppose à l'expansion de la gaine de pression 20. Bien que les spires 42 successives du fil de voûte 40 soient non agrafées, leur position axiale reste indexée par rapport à la gaine de pression 20 par la coopération directe entre la face interne 43 métallique du fil de voûte 40 et la gaine de pression 20 et par la butée axiale des faces latérales 48A, 48B contre la nervure 44, ou/et avec la région de la bande 41 insérée dans l'interstice 47.

Le ou les fils de voûte 40 utilisés pour fabriquer la structure de voûte de pression 27 sont de structure simple et de faible coût par rapport à des fils de formes agrafés et le procédé de fabrication de la structure de voûte de pression 27 est simplifié.

En outre, en cas de diffusion de gaz corrosif à travers la gaine de pression 20, ce gaz est libre de s'évacuer vers l'extérieur de la conduite 10 à travers les interstices 47, sans s'accumuler entre la structure de voûte de pression 27 et la gaine de pression 20.

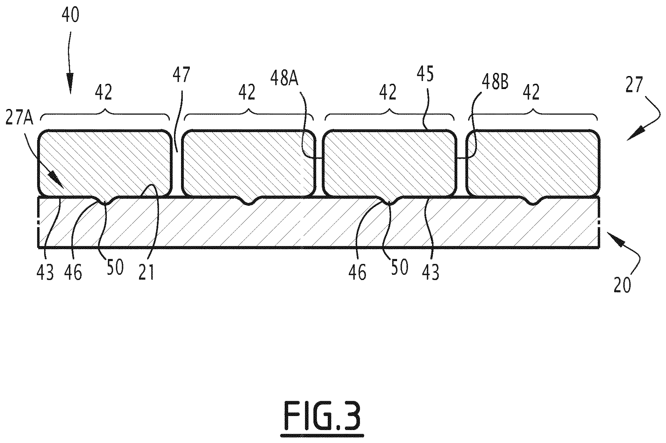

La figure 3 illustre une variante de structure de voûte de pression 27 d'une conduite 10 selon l'invention.

Selon cette variante, l'ensemble d'indexation 27A comporte une saillie hélicoïdale 50 qui fait saillie à partir de la face interne 43 du fil de voûte 40 pour d'indenter dans un logement hélicoïdal 46 ménagé dans la surface externe 21 de la gaine de pression 20.

La saillie hélicoïdale 50 est ici formée par une nervure ayant un sommet arrondi. Elle s'étend avantageusement continûment sur toute la longueur du fil de voûte 40, pour s'indenter continûment dans la surface externe 21 à chaque spire 42 du fil de voûte autour de l'axe A-A'. En variante, la saillie hélicoïdale 50 s'étend discontinûment, notamment au niveau d'éventuelles soudures du fil de voûte 40.

Avantageusement, la saillie hélicoïdale 50 est venue de matière avec le fil de voûte 40 ou est rapportée sur le fil de voûte 43.

Les régions de la face interne 43 situées de part et d'autre de la saillie hélicoïdale 50 sont des régions métalliques qui s'appliquent sur la surface externe 21 de la gaine de pression 20. Chaque région métallique présente un bord interne parallèle à l'axe A-A', pris en section dans chaque plan axial médian passant par l'axe A-A'.

Dans cet exemple, la saillie 50 est centrée par rapport aux faces latérales 48A, 48B du fil de voûte 43. En variante, non représentée, la saillie 50 est décentrée, par exemple en étant située plus près d'une des faces latérales 48A, 48B.

De préférence, la saillie 50 est fabriquée par application, sur la surface interne 43 du fil de voûte 40, d'un galet ayant un creux de section complémentaire à la section de la saillie 50, lors de la mise en forme du fil de voûte 40.

La hauteur de la saillie 50 est notamment supérieure à 1 % de l'épaisseur de la gaine de pression 20, prise perpendiculairement à l'axe central A-A', en particulier comprise entre 5% et 15 % de l'épaisseur de la gaine de pression 20.

La hauteur de la saillie 50 est généralement inférieure à 2 mm pour minimiser l'impact sur la gaine de pression 20. Elle est par exemple supérieure à 0,3 mm, et est notamment comprise entre 0,5 mm et 1,0 mm

De préférence, la saillie hélicoïdale 50 est insérée dans la surface externe 21 de la gaine de pression 20, en créant ainsi un logement 46 de forme complémentaire. Ceci est fait par exemple par l'application d'une force radiale lorsque le fil de voûte 40 est enroulé autour de la surface externe 21.

En raison du rapport des pressions s'appliquant sur la saillie 50 et sur le reste de la face interne 43, seule la saillie 50 s'insère dans la gaine de pression 20, le reste de la face interne 43 restant appliqué sur la surface externe 21.

Dans d'autres variantes, le fil de voûte 40 est chauffé par exemple à une température inférieure à la température de fusion du polymère de la gaine de pression 20, ou/et la gaine de pression 20 est chauffée.

Plus généralement, le fil de voûte 40 est chauffé à une température telle que la région du fil de voûte 40 appliquée sur la surface externe 21 de la gaine de pression 20 se trouve avantageusement à une température comprise entre +/- 50°C du point de fusion du polymère formant la gaine de pression 20.

Une fois que le fil de voûte 40 a été positionné, avantageusement en utilisant un galet presseur au point de pose, la tension s'appliquant sur le fil de voûte 40 est suffisante pour le maintenir en position. L'indentation de la saillie hélicoïdale 50 dans la gaine de pression 20 assure que le fil de voûte 40 ne peut pas sortir du logement 44 en raison d'une interférence géométrique avec la gaine de pression 20.

L'interstice 47 entre les spires successives 42 du fil de voûte 40 est choisi avec une grande précision, en utilisant notamment des galets d'espacement ou des peignes et éventuellement, un contrôle approprié de la vitesse de rotation de la machine d'enroulement du fil de voûte 40, en fonction de la vitesse de production de la conduite 10.

Ainsi, l'interstice 47 est défini indépendamment de la forme du fil de voûte 40, et est adapté précisément à la largeur nécessaire, qui est fonction de la conception de la conduite 10, de sa construction, et du rayon de courbure minimal (MBR) durant sa durée de vie.

L'interstice 47 peut être réduit par exemple s'il est prévu d'utiliser un tambour de grand diamètre pour stocker la conduite 10, ou si la gaine externe 30 gouverne le rayon de courbure minimal de la conduite 10. Un interstice 47 de largeur réduite limite le fluage de la gaine de pression 20 et donc autorise une réduction d'épaisseur de la gaine de pression 20, produisant un gain de coût.

Les spires successives 42 du fil de voûte 40 ne sont pas en contact les unes avec les autres, ce qui élimine ou réduit grandement les risques de contact et de fatigue par frettage. En outre, les interstices 47 définissent des passages de circulation des gaz, ce qui empêche leur accumulation et la corrosion localisée des couches de renfort.

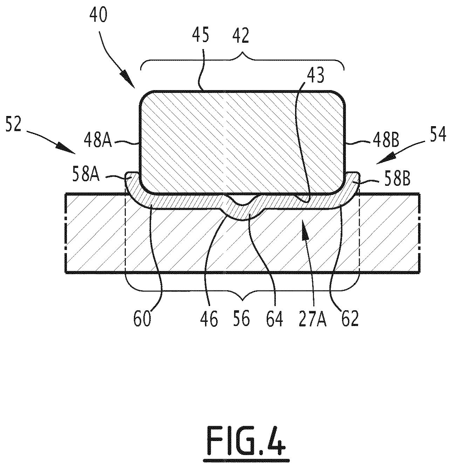

Dans chacune des variantes décrites sur les figures 4 à 11, la structure de voûte de pression 27 comporte en outre une couche intermédiaire 52, interposée entre le fil de voûte 40 et la surface externe 21 de la gaine de pression 20.

Dans l'exemple représenté sur la figure 4, la couche intermédiaire 52 est formée d'un feuillard 54 enroulé en hélice définissant des spires successives 56 autour de l'axe A-A'. Chaque spire 56 du feuillard 54 porte une spire 42 du fil de voûte 40. Le feuillard 54 est non agrafé.

Le fil de voûte 40 présente une face interne 43 sans relief, appliquée sur le feuillard 54.

Le feuillard 54 est formé d'un ruban de préférence métallique. Il présente avantageusement une épaisseur constante.

L'épaisseur du feuillard 54 est inférieure à la largeur de chaque spire 56, prise le long de l'axe A-A' et est au moins 10 fois inférieure à la longueur totale du feuillard 54, prise suivant l'enroulement du feuillard 54.

L'épaisseur du feuillard 54 est par exemple comprise entre 0,5 mm et 1,5 mm.

Chaque spire 56 du feuillard 54 comporte une région interne 60 et au moins un bord latéral relevé 58A, 58B, de préférence deux bords latéraux 58A, 58B relevés vers l'extérieur à l'écart de l'axe A-A'.

La région interne 60 présente, en section dans un plan axial médian passant par l'axe A-A', un bord interne s'étendant parallèle à l'axe A-A', le bord interne étant appliqué sur la surface externe 21 de la gaine de pression 20.

Les bords latéraux 58A, 58B et la région interne 60 forment un berceau s'ouvrant vers l'extérieur, et recevant de manière complémentaire le fil de voûte 40.

Les faces latérales 48A, 48B du fil de voûte 40 sont placées en regard des bords relevés 58A, 58B qui forment des butées axiales limitant le déplacement de chaque spire 42 du fil de voûte 40 par rapport à la gaine de pression 20.

L'ensemble d'indexation 27A comporte ici une saillie hélicoïdale 64, faisant saillie à partir de la région interne 60 du feuillard 54.

La saillie hélicoïdale 64 fait saillie vers l'axe A-A' à partir de la région interne 60 pour s'indenter dans un logement hélicoïdal 46 ménagé dans la surface externe 21 de la gaine de pression 20.

La saillie hélicoïdale 64 est ici formée par une nervure ayant un sommet arrondi. Elle s'étend avantageusement continûment sur toute la longueur du feuillard 54, pour s'indenter continûment dans la surface externe 21 à chaque spire 56 du feuillard 54 autour de l'axe A-A'.

Avantageusement, la saillie hélicoïdale 64 est venue de matière avec le feuillard 54 ou est rapportée sur le feuillard 54.

Les parties de la région interne 60 situées de part et d'autre de la saillie hélicoïdale 64 s'appliquent sur la surface externe 21 de la gaine de pression 20. Chaque partie de la région interne 60 située de part et d'autre de la saillie hélicoïdale 64 présente un bord interne, pris en section dans chaque plan axial médian, parallèle à l'axe A-A'.

Dans cet exemple, la saillie 64 est centrée par rapport aux bords latéraux 58A, 58B du feuillard 54. En variante, non représentée, la saillie 64 est décentrée, par exemple en étant située plus près d'un des bords latéraux 58A, 58B.

De préférence, la saillie 64 est fabriquée par déformation locale du feuillard 54.

La hauteur de la saillie 64 est notamment supérieure à 1 % de l'épaisseur de la gaine de pression 20, prise perpendiculairement à l'axe central A-A', en particulier comprise entre 5% et 15 % de l'épaisseur de la gaine de pression 20.

La hauteur de la saillie 64 est généralement inférieure à 2 mm pour minimiser l'impact sur la gaine de pression 20. La hauteur est par exemple supérieure à 0,3 mm, et est notamment comprise entre 0,5 mm et 1,0 mm

De préférence, la saillie hélicoïdale 64 est insérée dans la surface externe 21 de la gaine de pression 20, en créant ainsi un logement 46 de forme complémentaire. Ceci est fait par exemple par l'application d'une force radiale lorsque le feuillard 54 est enroulé autour de la surface externe 21 ou bien lorsque chaque spire 42 du fil de voûte 40 est enroulée autour de la gaine de pression 20 et est appliquée sur chaque spire 56 du feuillard 54.

En raison du rapport des pressions s'appliquant sur la saillie 64 et sur le reste de la région interne 60, seule la saillie 64 s'insère dans la gaine de pression 20, le reste de la région interne 60 restant appliqué sur la surface externe 21.

Dans d'autres variantes, le feuillard 54 est chauffé par exemple à une température inférieure à la température de fusion du polymère de la gaine de pression 20, notamment entre 40°C et 80°C, ou/et la gaine de pression 20 est chauffée. Un galet presseur est avantageusement utilisé pour positionner géométriquement le feuillard.

Plus généralement, le feuillard 54 est éventuellement chauffé à une température telle que la région appliquée sur la surface externe 21 de la gaine de pression 20 se trouve avantageusement à une température comprise entre +/- 50°C du point de fusion du polymère formant la gaine de pression 20.

Une fois que le feuillard 54 a été positionné, la tension sur le feuillard 54 est suffisante pour le maintenir en position. L'indentation de la saillie hélicoïdale 64 dans la gaine de pression 20 assure que le feuillard 54 ne peut pas sortir du logement 46 en raison d'une interférence géométrique avec la gaine de pression 20. Par suite, les spires 56 du feuillard 54, et les spires 42 du fil de voûte 40 portées par les spires 56 du feuillard 54 sont indexées axialement par rapport à la gaine de pression 20.

Une telle disposition permet donc d'utiliser des fils de voûte 40, de section transversale standard, sans saillie. Ceci réduit le coût des fils de voûte 40 utilisés.

L'utilisation de la couche intermédiaire 52 renforce en outre les propriétés de tenue en pression de la structure de voûte de pression 27, diminuant le cas échéant, l'épaisseur du fil de voûte 40.

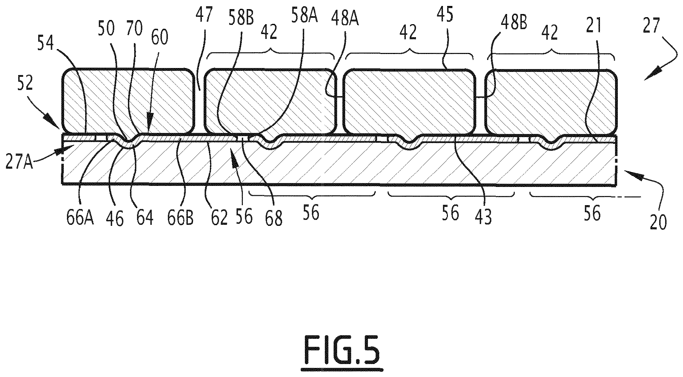

La structure de voûte de pression 27 illustrée par la figure 5 diffère de celle représentée sur la figure 4 en ce que la couche intermédiaire 52 comporte un feuillard 54 dépourvu de bords latéraux 58A, 58B en saillie vers l'extérieur.

La saillie hélicoïdale 64 est en outre décentrée par rapport à la région interne 60 du feuillard 54. Elle définit une première partie 66A de la région interne 60 située d'un côté de la saillie hélicoïdale 64 et une deuxième partie 66B de la région interne 60 située d'un autre côté de la saillie hélicoïdale 64.

La deuxième partie 66B présente une largeur, prise le long de l'axe A-A', supérieure à la largeur de la première partie 66A, prise le long de l'axe A-A'.

Les spires successives 56 du feuillard 54 délimitent entre elles un interstice hélicoïdal 68 qui s'étend transversalement par rapport à l'axe A-A' entre les bords latéraux 58A, 58B.

Le feuillard 54 définit, à l'opposé de la saillie hélicoïdale 64, une cavité hélicoïdale 70 de positionnement du fil de voûte 40 qui s'ouvre vers l'extérieur à l'écart de l'axe A-A'.

De manière analogue au fil de voûte 40 décrit sur la figure 3, le fil de voûte 40 comporte une saillie hélicoïdale 50 reçue dans la cavité 70, bloquant le déplacement axial de chaque spire 42 du fil de voûte 40 par rapport à chaque spire 56 du feuillard 54, et partant, par rapport à la surface externe 21 de la gaine de pression 20, grâce à la saillie 64 insérée dans la gaine de pression 20.

Le fil de voûte 40 muni de la saillie 50 est par exemple réalisée par un procédé de laminage à chaud ou un procédé de laminage à froid. Le laminage à chaud réduit les coûts, tout en respectant les tolérances et la rugosité de surface du fil de voûte 40, puisque le fil de voûte 40 n'est pas agrafé. L'utilisation du laminage à chaud est possible à cause du moindre besoin de tolérances serrées liés au non agrafage et à la pose avec galets de positionnement.

Chaque partie 66A, 66B de la région interne 60 est appliquée contre la surface externe 21 de la gaine de pression 20 et définit, dans chaque plan axial médian passant par l'axe A-A', un bord interne parallèle à l'axe A-A'.

La face interne 43 de chaque spire 42 du fil de voûte 40 est appliquée sur deux spires successives 56 de la couche intermédiaire 52, en chevauchant l'interstice 68, compte tenu du décentrage de la cavité 70 par rapport à la région intérieure 60.

Ainsi, le fluage de la gaine de pression 20 est évité, puisqu'il est bloqué par la région interne 60 du feuillard 54, et en regard de l'interstice 68, par la face interne 43 du fil de voûte 40.

De même, l'application du feuillard 54 sur la surface externe 21 de la gaine de pression 20 et le blocage de l'interstice 68 par la face interne 43 du fil de forme 40 limite la diffusion des gaz provenant du passage central 16 à travers la gaine de pression 20.

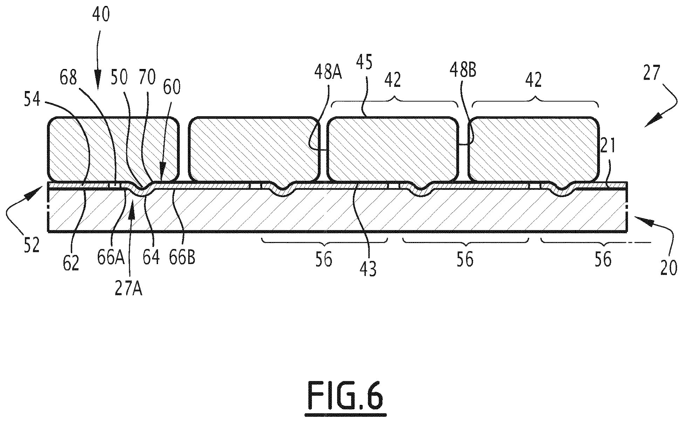

Dans la variante illustrée sur la figure 6, la saillie hélicoïdale 50 présente sur le fil de voûte 40 est décentrée par rapport aux bords latéraux 48A, 48B du fil de voûte 40. Ainsi, l'interstice 68 est sensiblement centré par rapport à la face interne 43 du fil de voûte 40 lorsque la saillie hélicoïdale 50 est reçue dans la cavité 70.

Dans les modes de réalisation de la figure 5 ou de la figure 6, le feuillard 54 est de préférence revêtu d'une couche de plastique fine sur sa face externe.

La couche de plastique assure un contact préférentiel avec le ou chaque fil de voûte 40 disposé en appui sur le feuillard 54.

Cette couche garantit une étanchéité améliorée aux gaz de la structure de voûte de pression 27, et un meilleur comportement dynamique lors de l'utilisation, notamment lorsque la conduite flexible 10 est une colonne montante. La couche de plastique permet en outre d'utiliser des matériaux différents entre le feuillard 54 et le fil de voûte 40, sans créer de la corrosion galvanique.

De préférence, l'épaisseur de la couche de plastique est inférieure à 1000 µm, et notamment inférieure à 700 µm et comprise par exemple entre 400 nm et 600 µm.

La couche de plastique est par exemple réalisée à base d'une polyoléfine telle que du polyéthylène ou du polypropylène, à base d'un polyamide tel que du PA11 ou du PA12, ou à base d'un polymère fluoré tel que du polyfluorure de vinylidène (PVDF) ou une composition comprenant d'une part un homopolymère de polyfluorure de vinylidène (PVDF) et, un copolymère de fluorure de vinylidène (VDF) et d'un comonomère fluoré tel que du hexafluoropropylène (HFP) ou du chlorotrifluoroethylène (CTFE).

En variante, la couche de plastique est formée à base d'un polymère haute performance tel qu'un polyaryléthercétone (PAEK) tel que le polyéthercétone (PEK), le polyétheréthercétone (PEEK), le polyétheréthercétonecétone (PEEKK), le polyéthercétonecétone (PEKK) ou le polyéthercétoneéthercétonecétone (PEKEKK), le polyamide-imide (PAl), le polyéther-imide (PEI), le polysulfone (PSU), le polyphénylsulfone (PPSU), le polyéthersulfone (PES) , le polyarylsulfone (PAS), le polyphénylèneéther (PPE), le polysulfure de phénylène (PPS) les polymères à cristaux liquides (LCP), le polyphtalamide (PPA), les dérivés fluorés tels que le polytétrafluoroéthylène (PTFE), le perfluoropolyéther (PFPE), le perfluoroalkoxy (PFA) ou l'éthylène chlorotrifloroethylène (ECTFE) et/ou leurs mélanges.. Ceci optimise la résistance à l'usure, la diffusion, la température d'utilisation.

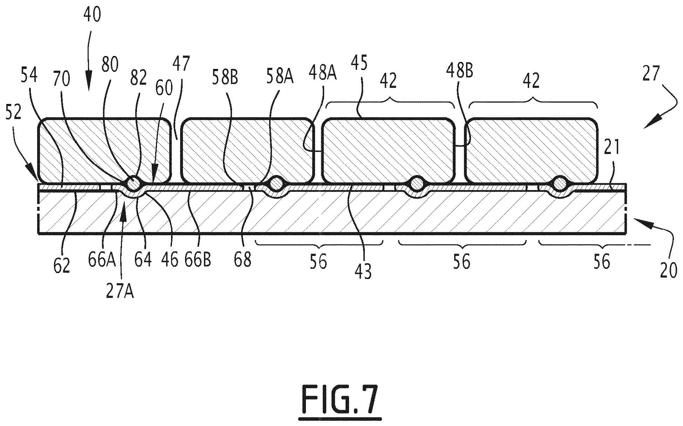

La structure de voûte de pression 27 illustrée par la figure 7 diffère de celle illustrée par la figure 6 en ce que l'ensemble d'indexation 27A comporte un organe filiforme intermédiaire 80 enroulé dans la cavité hélicoïdale 70 située à l'extérieur de la saillie hélicoïdale 64.

L'ensemble d'indexation 27A comporte en outre une gorge 82 hélicoïdale ménagée dans la face interne 43 du fil de voûte 40, la gorge 82 débouchant vers l'axe A-A'.

Dans cet exemple, l'organe filiforme intermédiaire 80 est par exemple une tige enroulée en hélice dans la cavité 70. L'organe filiforme intermédiaire 80 est par exemple métallique.

Le file de voûte 40 muni de la gorge 82 est par exemple réalisée par un procédé de laminage à chaud ou un procédé de laminage à froid. Le laminage à chaud réduit les coûts, tout en respectant les tolérances et la rugosité de surface du fil de voûte 40, puisque le fil de voûte 40 n'est pas agrafé. L'utilisation du laminage à chaud est possible à cause du moindre besoin de tolérances serrées liés au non agrafage et à la pose avec galets de positionnement.

L'organe filiforme intermédiaire 80 est logé dans la cavité 70, et fait partiellement saillie vers l'extérieur au-delà de la cavité 70. La région de l'organe filiforme intermédiaire 80 en saillie hors de la cavité 70 est reçue dans la gorge 82 ménagée dans le fil de voûte 40, assurant une indexation du fil de voûte 40 par rapport à la couche intermédiaire 52, et partant, par rapport à la gaine de pression 20, par l'intermédiaire de la saillie hélicoïdale 64 insérée dans la gaine de pression 20.

Une telle variante est particulièrement avantageuse lorsque la couche intermédiaire 52 doit être fabriquée sur une machine différente de celle permettant d'enrouler le fil de voûte 40 autour de la couche intermédiaire 52.

Dans ce cas, la couche intermédiaire 52 est tout d'abord posée, l'organe filiforme intermédiaire 80 étant mis en place dans la cavité 70, lors de la pose de la couche intermédiaire 52 sur la surface externe 21 de la gaine de pression 20 ou juste après celle-ci. L'organe filiforme intermédiaire 80 est mis en tension, ce qui maintient les spires successives 56 du feuillard 54 appliquées contre la surface externe 21, même en cas de transport de l'ensemble formé par la gaine de pression 20 et par la couche intermédiaire 52 vers une machine d'enroulement.

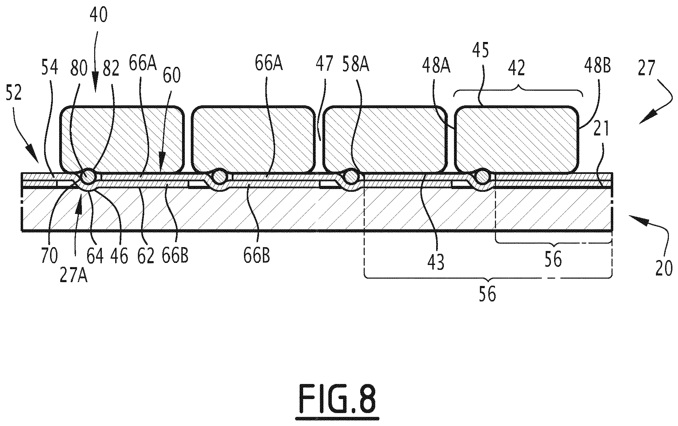

La variante illustrée par la figure 8 diffère de celle de la figure 7 en ce que la première partie 66A de la région intérieure 60 de chaque spire 56 du feuillard 54 recouvre la deuxième partie 66B d'une spire 56 adjacente du feuillard 54.

La deuxième partie 66B de la région interne 60 est appliquée contre la surface externe 21 de la gaine de pression 20 et définit, dans chaque plan axial médian passant par l'axe A-A', un bord interne parallèle à l'axe A-A'.

Aucun interstice transversal 68 n'existe entre les spires 56 successives du feuillard 54.

Comme pour les modes de réalisation des figures 5 et 6, le feuillard 54 est de préférence revêtu d'une couche de plastique fine sur ses faces. La couche de plastique est telle que définie plus haut.

La couche de plastique assure une meilleure étanchéité aux gaz de diffusion. Elle facilite aussi le glissement entre les spires 56 du feuillard 54 nécessaire à la flexibilité de la conduite 10. De plus, l'étanchéité aux gaz permet d'envisager l'utilisation d'un fil de voûte 40 en matériau à haute caractéristique mécanique, non sensible aux gaz corrosifs

L'organe filiforme intermédiaire 80 est calé dans la cavité 70, entre la première partie 66A de la région intérieure 60 de la spire 56, et le bord latéral 58A de la première partie 66A de la région intérieure 60 d'une spire 56 adjacente, ladite première partie 66A de la région intérieure 60 d'une spire 56 adjacente étant appliquée sur la deuxième partie 66B de la spire 56.

Dans les modes de réalisation des figures 7 et 8, la gorge 82 ménagée dans le fil de voûte 40 est décentrée par rapport aux faces latérales 48A, 48B du fil de voûte 40, en étant située au voisinage d'une face latérale 48A du fil de voûte 40.

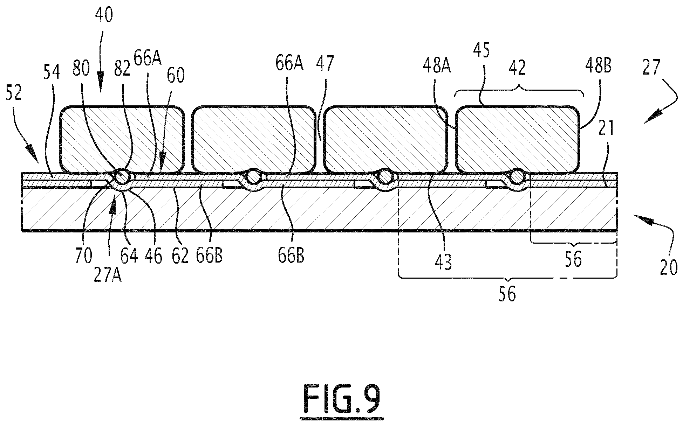

En variante, comme illustré par la figure 9, la gorge 82 est centrée par rapport aux faces latérales 48A, 48B du fil de voûte 40. De même, la cavité 70 est centrée par rapport aux bords latéraux 58A, 58B du feuillard 54.

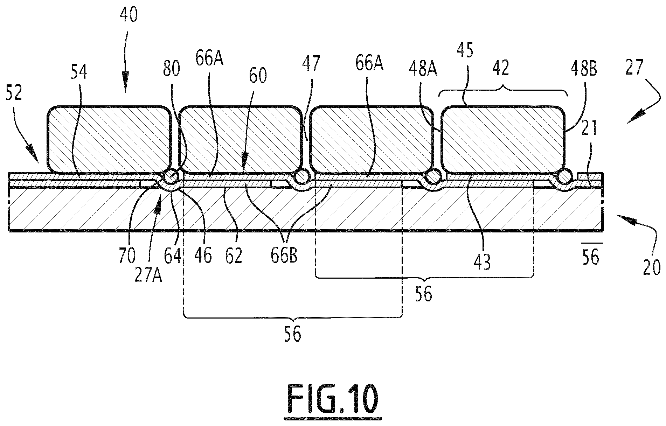

Dans la variante illustrée par la figure 10, le fil de forme 40 est dépourvu de saillie hélicoïdale 50 ou de gorge hélicoïdale 82. En projection dans au moins un plan axial médian passant par l'axe A-A', la face interne 43 du fil de voûte 40 présente un bord interne appliqué sur la surface externe 20 parallèle à l'axe A-A' sur toute sa largeur le long de l'axe A-A'.

La face interne 43 s'applique sur une première partie 66A de la région interne 60 d'une spire 56 du feuillard 54, entre deux spires successives de l'organe filiforme intermédiaire 80 reçu dans la cavité 70 du feuillard 54.

L'organe filiforme intermédiaire 80 fait saillie hors de la cavité 70 vers l'extérieur, au-delà de la face interne 43 du fil de forme 40, transversalement par rapport à l'axe A-A'. Ainsi, chaque spire de l'organe filiforme intermédiaire 80 forme une butée empêchant le déplacement axial de chaque spire 42 du fil de voûte 40.

Dans ces exemples, l'organe filiforme intermédiaire 80 maintient la saillie hélicoïdale 64 dans la surface externe 21 de la gaine de pression 20, renforce le feuillard 54 contre la pression interne, et assure l'espacement entre les spires 42 successives du fil de voûte 40.

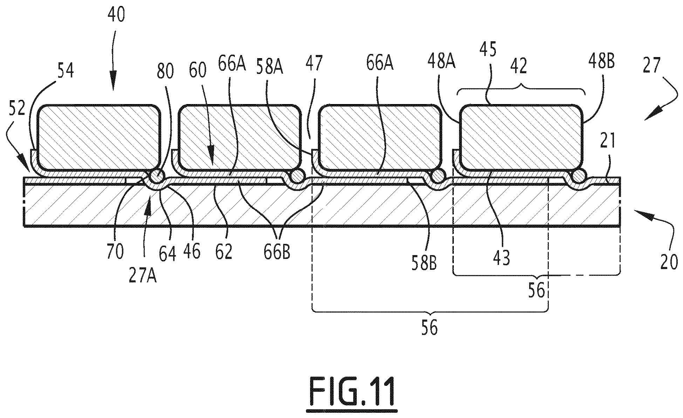

La variante de la figure 11 diffère de celle de la figure 10 en ce que la première partie 66A de la région interne 60 de chaque spire 56 du feuillard 54 présente un bord latéral 58A relevé vers l'extérieur. Comme précédemment pour la structure de voûte de pression 27 de la figure 4, le bord latéral 58A forme une butée axiale, en regard d'une première face latérale 48A du fil de voûte 40. Le fil de voûte 40 est par ailleurs calé entre le bord latéral 58A disposé en regard de sa première face latérale 48A et le bord latéral d'une spire adjacente 56 du feuillard 54, placée en regard de sa deuxième face latérale 48B.

Dans cet exemple, l'organe filiforme intermédiaire 80 ne forme pas une autre butée axiale disposée en regard de la face latérale opposée 48B. Il sert juste à tenir le feuillard 54 en place et supporter les efforts radiaux de pression mais il se trouve à un diamètre tel qu'il n'interfère pas avec le fil de voûte 40.

Ainsi, le mouvement de chaque spire 42 du fil de voûte 40 est limité axialement entre les bords relevés 58A de deux spires 56 successives du feuillard 54.

Dans une variante des structures de voûte de pression 27 illustrées par les figures 4 à 11, la structure de voûte de pression 27 ne comprend pas au moins une région métallique de contact appliquée sur la surface externe 21 de la gaine de pression 20.

La région de contact appliquée sur la surface externe 21 peut présenter un bord parallèle à l'axe central A-A', en section dans le plan axial médian, comme décrit précédemment. Toutefois, la couche intermédiaire 52, munie de la saillie d'indexation 64 est réalisée en un matériau non métallique, par exemple polymère, notamment en polyétheréthercétone (PEEK).

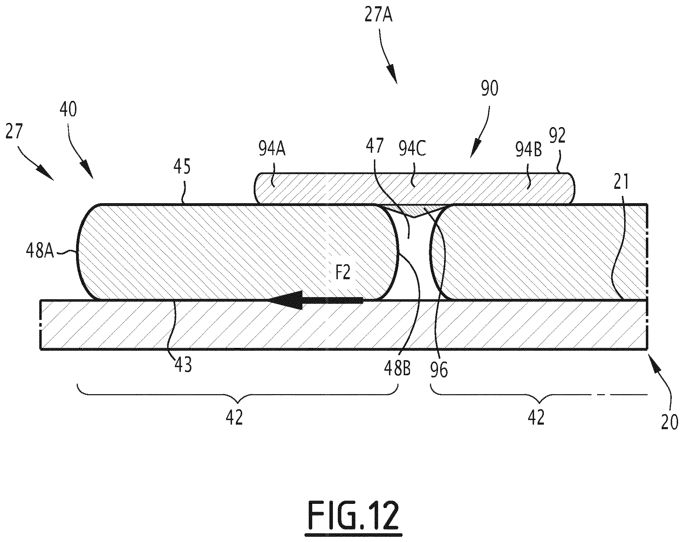

Une autre variante de conduite flexible 10 est illustrée par la figure 12.

Comme précédemment, le fil de voûte 40 comporte des spires successives 42 qui sont non agrafées. Chaque spire 42 présente de préférence, en section dans un plan axial médian passant par l'axe A-A', un contour sensiblement polygonal, par exemple sensiblement rectangle, avec éventuellement des sommets arrondis.

Dans cet exemple, le fil de voûte 40 présente une face interne 43 métallique appliquée sur la surface externe 21 de la gaine de pression 20. Dans chaque plan médian passant par l'axe A-A', le bord interne de la spire 42 au niveau de la face interne 43 s'étend parallèlement à l'axe A-A' et est en contact avec la surface externe 21.

La structure de voûte de pression 27 comporte, en plus du fil de voûte 40, une bande externe formée d'un fil plat 90 enroulé en hélice, destinée à éviter le tassement des spires 42 du fil de voûte 40.

Le fil plat 90 est enroulé à pas court, de préférence avec le même angle d'hélice que le fil de voûte 40. L'angle d'hélice est de valeur absolue proche de 90° par rapport à l'axe A-A', typiquement compris entre 75° et 90°.

Le fil plat 90 est par exemple un fil métallique. Il présente une largeur, prise le long de l'axe A-A', supérieure à son épaisseur, prise perpendiculairement à l'axe A-A'.

Le fil plat 90 présente une pluralité de spires 92, chevauchant l'interstice 47 entre les spires successives 42 du fil de voûte 40.

Chaque spire 92 du fil plat 90 présente ainsi une première région 94A disposée en appui sur la face externe 45 d'une première spire 42 du fil de voûte 40, et une deuxième région 94B disposée en appui sur la face externe 45 d'une spire adjacente 42 du fil de voûte 40. Il comporte en outre une partie centrale 94C couvrant l'interstice 47, et à l'opposé de la partie centrale 94C, une saillie 96 de blocage du tassage faisant saillie dans l'interstice 47. Avantageusement, la saillie de blocage du tassage 96 présente une forme convergeant vers l'axe A-A', en particulier une forme triangulaire, prise en section dans un plan axial médian passant par l'axe A-A'.

Le triangle définissant la saillie 96 en section dans le plan axial médian présente un angle au sommet supérieur à 90°, par exemple compris entre 120° et 160°.

La hauteur de la saillie 96, prise depuis une face interne du fil plat 90 dans l'interstice 47 entre les spires 42 du fil de voûte 40 est inférieure à 50% de la hauteur du fil de voûte 40, prise entre la face interne 43 et la face externe 45.

La saillie 96 est centrée par rapport aux faces latérales du fil 90.

Lorsqu'une spire 42 du fil de voûte 40 tend à se déplacer vers une spire 42 adjacente, réduisant la largeur de l'interstice 47, la face latérale 48B de la spire 42 entre en contact avec la saillie 96, en particulier avec un bord de la surface triangulaire définissant la saillie 96. Ceci créé un léger déplacement radial à l'écart de l'axe A-A' de la spire 92 du fil plat 90.

Un tel déplacement engendre une force radiale appliquée vers l'axe A-A' par le fil 90 sur les faces externes 45 des spires 42 adjacentes du fil de voûte 40, augmentant la pression de contact entre les faces externes 45 des spires 42 et le fil plat 90.

Cette augmentation de la pression de contact tend à stopper la migration de la spire 42 vers la spire 42 adjacente.

Ceci est en outre rendu possible grâce au contact entre le métal du fil de voûte 40 sur la face interne 43 du fil de voûte 40 et le polymère de la surface externe 21 de la gaine de pression 20 sur une surface cylindrique engendrée autour de l'axe A-A'.

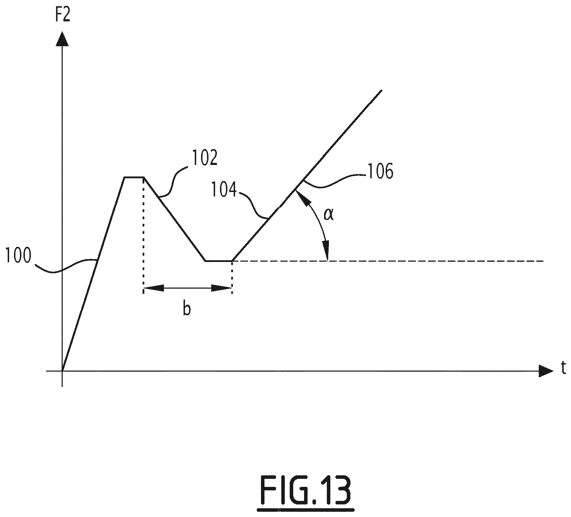

La figure 13 illustre schématiquement l'évolution de la force de friction F2 entre la face interne 43 et la surface externe 21 de la gaine de pression 20 en fonction du temps, lors de l'application d'une force de déplacement d'une spire 42 vers une spire adjacente 42.

Dans la phase initiale 100, une force F2 croissante s'opposant à la force de déplacement s'applique d'abord entre la face interne 43 du fil de voûte 40 et la surface externe 21 de la gaine de pression 20. La spire 42 reste immobile.

À la limite d'adhésion de la spire 42 sur la surface externe 21, au début de la phase 102, la spire 42 commence à se déplacer vers la spire 42 adjacente, réduisant la force de frottement F2 s'appliquant sur la face interne 43.

Cependant, au début de la phase 104, lorsque la face latérale 48A, 48B de la spire 42 entre en contact avec la saillie de blocage 96, le déplacement transversal du fil plat 90 vers l'extérieur induit une augmentation de la force s'appliquant sur la face externe 45 de la spire 42 et donc une augmentation de la force de friction F2 s'appliquant sur la face interne 43. Au-delà du point 106, la force de friction F2 augmente au-delà du seuil requis autorisant le déplacement de la spire 42 vers l'autre spire, induisant un arrêt du déplacement de la spire 42.

Ce comportement est complètement différent de celui d'une structure de voûte de pression 27 dans lequel le fil plat 90 serait dépourvu de saillie 96.

Pour régler la durée (b) durant laquelle la spire 42 se déplace, sans entrer en contact avec la saillie 96, il est possible de modifier la largeur de la saillie 96.

Par ailleurs, il est possible également de modifier la pente α de la phase 104, en modifiant l'angle au sommet du triangle de la saillie 96, l'épaisseur du fil plat 90, le rapport entre l'épaisseur du fil plat 90 et le diamètre de pose du fil plat 90, la largeur du fil plat 90 ou/et le module du matériau constituant le fil plat 90.

En variante de ce mode de réalisation, la saillie 96 présente une forme non-triangulaire, par exemple ayant une variation régulière de pente, avec avantageusement une pente relativement plus faible au début du contact entre la saillie 96 et la face latérale 48B, et qui augmente au fur et à mesure que l'interstice 47 diminue en largeur.

Dans une autre variante, la surface interne du fil plat 90 est rendue rugueuse ou est creusée pour engendrer des passages de circulation de gaz.

Dans la structure de voûte de pression 27 décrite sur la figure 12, le fil de voûte 40 et le fil plat 90 présentent chacun des formes géométriques simples. Leur fabrication engendre des niveaux réduits de contraintes résiduelles. Ceci est bénéfique pour la résistance à la corrosion, notamment à la corrosion sous contrainte (« Stress Corrosion Cracking » ou SCC) et à la corrosion sous contrainte en présence de sulfure d'hydrogène (« Sulfide stress cracking » ou « SSC »). De même, le fil de voûte 40 est moins sujet à la fatigue.

Il est plus simple également de poser un fil de voûte 40 de section rectangulaire qu'un fil de forme, par exemple en forme de Z, et également d'éviter le tuilage.

De même, la saillie 96 présente sur le fil plat 90 assure un centrage spontané des spires 42 du fil de voûte 40 suite à son enroulement, lors de la fabrication de la conduite flexible.

Le contact entre le fil de voûte 40 et le fil plat 90 étant sur une surface cylindrique d'axe A-A', les forces s'appliquant sur les différentes spires 42, 92 des fils 40, 90 sont plus homogènes et sont plus facilement contrôlables. Ce contrôle est par exemple réalisé en jouant sur l'épaisseur des fils, ou la surface de contact entre les spires 42, 92.

Dans une variante, la gaine de pression 20 comporte une couche interne de maintien de pression, et une couche externe sacrificielle, liée à la couche interne. La surface externe 21 est délimitée sur la couche externe sacrificielle.

## Revendications

1. Conduite flexible (10) de transport de fluide, comportant :
- une gaine interne (20), délimitant intérieurement un passage (16) de circulation de fluide, et une surface externe (21), le passage de circulation de fluide (16) définissant un axe central (A-A') ;
- une structure de voûte de pression (27) non agrafée, disposée autour de la gaine interne (20), comportant au moins un fil de voûte (40) métallique enroulé à pas court formant une pluralité de spires (42) successives autour de la surface externe (21), le ou chaque fil de voûte (40) enroulé étant non agrafé ;
- au moins une nappe (24, 25) d'armures de traction, enroulée autour de la structure de voûte de pression (27) ;
dans laquelle la structure de voûte de pression (27) comprend au moins une région métallique de contact appliquée sur la surface externe (21) de la gaine interne (20), la région métallique de contact présentant, en section dans au moins un plan axial médian passant par l'axe central (A-A'), un bord interne parallèle à l'axe central (A-A'),
et dans laquelle la conduite flexible (10) comporte un ensemble d'indexation (27A) de la position axiale de chaque spire (42) le long de l'axe central (A-A'), propre à maintenir un interstice (47) entre chaque paire de spires (42) adjacentes,
**caractérisée en ce que** la région métallique de contact est définie sur le ou sur chaque fil de voûte (40) enroulé, l'ensemble d'indexation (27A) comportant une saillie d'indexation (50) formée sur ou portée par le ou chaque fil de voûte (40) enroulé, la saillie d'indexation (50) étant insérée dans la gaine interne (20)
ou **en ce que** la structure de voûte de pression (27) comporte au moins une couche intermédiaire métallique (52), interposée entre le ou chaque fil de voûte (40) enroulé et la gaine interne (20), la couche intermédiaire métallique (52) définissant la ou chaque région de contact appliquée sur la surface externe (21), l'ensemble d'indexation (27A) comportant au moins une saillie d'indexation (64) formée sur ou portée par la couche intermédiaire métallique (52), la saillie d'indexation (64) étant insérée dans la gaine interne (20).

2. Conduite flexible (10) selon la revendication 1, dans laquelle l'ensemble d'indexation (27A) comporte une nervure (44) formée dans la gaine interne (20), faisant saillie dans l'interstice (47) entre au moins deux spires (42) successives du fil de voûte (40) le long de l'axe central (A-A')

3. Conduite flexible (10) selon la revendication 2, dans laquelle la nervure (44) est formée par introduction de polymère de la gaine interne (20) dans l'interstice (47) résultant avantageusement d'un frettage du ou de chaque fil de voûte (40) autour de la gaine interne (20), éventuellement avec l'application d'un chauffage ou/et d'une pression, ou est formée par rainurage de la surface externe (21) de la gaine interne (20).

4. Conduite flexible (10) selon l'une quelconque des revendications précédentes, comprenant une bande externe enroulée autour du ou de chaque fil de voûte (40), l'ensemble d'indexation (27A) comportant une saillie de blocage (96) faisant saillie à partir de la bande externe dans l'interstice (47) entre au moins deux spires (42) adjacentes.

5. Conduite flexible (10) selon la revendication 4, dans laquelle la saillie de blocage (96) présente une forme convergeant vers l'axe central (A-A') en section dans le plan axial médian passant par l'axe central (A-A'), en particulier une forme triangulaire.

6. Conduite flexible (10) selon la revendication 1, dans laquelle l'ensemble d'indexation (27A) comporte une cavité (70) ménagée dans la couche intermédiaire métallique (52), la cavité (70) s'ouvrant vers le fil de voûte (40), à l'écart de l'axe central (A-A'), et un organe intermédiaire d'indexation comprenant une saillie de positionnement (50) formée sur ou portée par le ou chaque fil de voûte (40) enroulé, la saillie de positionnement (50) étant reçue dans la cavité (70), ou un organe filiforme intermédiaire (80), reçu dans la cavité (70) et dans une gorge (80) opposée ménagée dans le ou chaque fil de voûte (40).

7. Conduite flexible (10) selon l'une quelconque des revendications 1 ou 6, dans laquelle la couche intermédiaire métallique (52) est formée par un feuillard (54) non agrafé présentant des spires (56) enroulées autour de l'axe central (A-A'), chaque spire (42) du ou de chaque fil de voûte (40) étant portée par au moins une spire (56) du feuillard (54) et dans laquelle, optionnellement, la cavité (70) est centrée par rapport à chaque spire (56) du feuillard (54), ou est située au voisinage d'un bord d'au moins une spire (56) du feuillard.

8. Conduite flexible (10) selon la revendication 7, dans laquelle chaque spire (56) du feuillard (54) définit au moins un bord latéral (58A, 58B) relevé à l'écart de l'axe central (A-A'), avantageusement deux bords latéraux (58A, 58B) relevés à l'écart de l'axe central (A-A'), chaque spire (42) de chaque fil de voûte (40) butant sur le bord latéral relevé (58A, 58B), avantageusement sur les bords latéraux relevés (58A, 58B).

9. Conduite flexible (10) selon l'une quelconque des revendications 7 ou 8, dans laquelle chaque spire (42) du feuillard (54) définit une partie (66B) en contact avec la surface externe (21) de la gaine interne (20), et une partie (66A) additionnelle de recouvrement, disposée en appui sur une partie (66B) en contact avec la surface externe (21) de la gaine interne (20) d'une spire (42) adjacente.

10. Conduite flexible (10) selon l'une quelconque des revendications précédentes, dans laquelle le ou chaque fil de voûte (40) présente une section de forme polygonale, prise dans le plan axial médian, en particulier une section de forme rectangulaire, trapézoïdale ou losange.

11. Conduite flexible (10) selon l'une quelconque des revendications précédentes, dans laquelle la gaine interne (20) est formée d'un seul tenant en un matériau polymère, ou est formée d'une couche interne de maintien de pression, et d'une couche externe sacrificielle, liée à la couche interne.

12. Procédé de fabrication d'une conduite flexible (10) de transport de fluide, selon l'une des revendications 1 à 11, comportant :
- fourniture d'une gaine interne (20), délimitant intérieurement un passage (16) de circulation de fluide, et une surface externe (21), le passage de circulation de fluide (16) définissant un axe central (A-A') ;
- disposition d'une structure de voûte de pression (27) non agrafée autour de la gaine interne (20), comportant l'enroulement à pas court d'au moins un fil de voûte (40) métallique en formant une pluralité de spires (42) successives autour de la surface externe (21), le ou chaque fil de voûte (40) est enroulé en étant non agrafé ;
- enroulement d'au moins une nappe (24, 25) d'armures de traction autour de la structure de voûte de pression (27) ;
le procédé comportant l'application d'au moins une région métallique de contact de la structure de voûte de pression (27) sur la surface externe (21) de la gaine interne (20), la région métallique de contact présentant, en section dans au moins un plan axial médian passant par l'axe central (A-A'), un bord interne parallèle à l'axe central (A-A'),
le procédé comportant une indexation de la position axiale de chaque spire (42) le long de l'axe central (A-A') par un ensemble d'indexation (27A) propre à maintenir un interstice (47) entre chaque paire de spires (42) adjacentes,
dans lequel la région métallique de contact est définie sur le ou sur chaque fil de voûte (40) enroulé, l'ensemble d'indexation (27A) comportant une saillie d'indexation (50) formée sur ou portée par le ou chaque fil de voûte (40) enroulé, la saillie d'indexation (50) étant insérée dans la gaine interne (20), ou
dans lequel le procédé comprend la mise en place d'au moins une couche intermédiaire métallique (52) sur la surface externe (21) de la gaine interne (20), puis l'enroulement du ou de chaque fil de voûte (40) sur la couche intermédiaire métallique (52), la couche intermédiaire métallique (52) définissant la ou chaque région de contact appliquée sur la surface externe (21), l'ensemble d'indexation (27A) comportant au moins une saillie d'indexation (64) formée sur ou portée par la couche intermédiaire métallique (52), la saillie d'indexation (64) étant insérée dans la gaine interne (20).

13. Procédé selon la revendication 12, dans laquelle la région métallique de contact est définie sur le ou chaque fil de voûte (40) enroulé, le procédé comprenant la formation d'une nervure (44) de l'ensemble d'indexation (27A) dans la gaine interne (20), par frettage du ou de chaque fil de voûte (40), éventuellement avec un chauffage du fil de voûte (40) ou/et de la gaine interne (20), ou par rainurage de la gaine interne (20) pour former un logement hélicoïdal (46), puis par insertion du fil de voûte (40) dans le logement hélicoïdal (46)

14. Procédé selon la revendication 12, comprenant la mise en place d'au moins une couche intermédiaire métallique (52) sur la surface externe (21) de la gaine interne (20), puis l'enroulement du ou de chaque fil de voûte (40) sur la couche intermédiaire métallique (52), la couche intermédiaire métallique (52) définissant la ou chaque région de contact appliquée sur la surface externe (21).

## Patentansprüche

1. Flexible Leitung (10) für Fluidtransport, umfassend:
- einen inneren Mantel (20), der innen einen Durchgang (16) für Fluidzirkulation begrenzt, und eine äußere Oberfläche (21), wobei der Fluidzirkulationsdurchgang (16) eine Mittelachse (A-A') definiert;
- eine nicht geklammerte Druckgewölbestruktur (27), die um den inneren Mantel (20) angeordnet ist, umfassend mindestens einen metallischen Gewölbedraht (40), der mit kurzer Steigung gewickelt ist und eine Vielzahl von aufeinanderfolgenden Windungen (42) um die Außenfläche (21) bildet, wobei der oder jeder gewickelte Gewölbedraht (40) nicht geklammert ist;
- mindestens eine Zugbewehrungslage (24, 25), die um die Druckgewölbestruktur (27) gewickelt ist;
wobei die Druckgewölbestruktur (27) mindestens einen metallischen Kontaktbereich umfasst, der auf die Außenfläche (21) des inneren Mantels (20) aufgebracht ist, wobei der metallische Kontaktbereich im Schnitt in mindestens einer axialen Mittelebene, die durch die Mittelachse (A-A') verläuft, einen inneren Rand parallel zu der Mittelachse (A-A') aufweist,
und wobei die flexible Leitung (10) eine Indexierungsanordnung (27A) der axialen Position jeder Windung (42) entlang der Mittelachse (A-A') umfasst, die geeignet ist, um einen Zwischenraum (47) zwischen jedem Paar benachbarter Windungen (42) beizubehalten,
**dadurch gekennzeichnet, dass** der metallische Kontaktbereich auf dem oder jedem gewickelten Gewölbedraht (40) definiert ist, die Indexierungsanordnung (27A) umfassend einen Indexierungsvorsprung (50) aufweist, der an dem oder jedem gewickelten Gewölbedraht (40) gebildet ist oder davon getragen wird, wobei der Indexierungsvorsprung (50) in den inneren Mantel (20) eingesetzt ist
oder dass die Druckgewölbestruktur (27) mindestens eine metallische Zwischenschicht (52) umfasst, die zwischen den oder jeden gewickelten Gewölbedraht (40) und den inneren Mantel (20) eingefügt ist, die metallische Zwischenschicht (52) den oder jeden Kontaktbereich definiert, der auf die Außenfläche (21) aufgebracht ist, die Indexierungsanordnung (27A) umfassend mindestens einen Indexierungsvorsprung (64), der auf der metallischen Zwischenschicht (52) gebildet ist oder davon getragen wird, wobei der Indexierungsvorsprung (64) in den inneren Mantel (20) eingesetzt ist.

2. Flexible Leitung (10) nach Anspruch 1, wobei die Indexierungsanordnung (27A) eine in dem inneren Mantel (20) gebildete Rippe (44) umfasst, die in den Zwischenraum (47) zwischen mindestens zwei aufeinanderfolgenden Windungen (42) des Gewölbedrahts (40) entlang der Mittelachse (A-A') hervorsteht.

3. Flexible Leitung (10) nach Anspruch 2, wobei die Rippe (44) durch Einführen von Polymer des inneren Mantels (20) in den Zwischenraum (47) gebildet ist, der vorteilhafterweise aus einem Schrumpfen des oder jedes Gewölbedrahts (40) um den inneren Mantel (20), möglicherweise unter Anwendung von Wärme und/oder Druck, resultiert, oder durch Rillen der Außenfläche (21) des inneren Mantels (20) gebildet ist.

4. Flexible Leitung (10) nach einem der vorherigen Ansprüche, umfassend einen äußeren Streifen, der um den oder jeden Gewölbedraht (40) gewickelt ist, die Indexierungsanordnung (27A) umfassend einen Verriegelungsvorsprung (96) aufweist, der von dem äußeren Streifen in den Zwischenraum (47) zwischen mindestens zwei benachbarten Windungen (42) hervorsteht.

5. Flexible Leitung (10) nach Anspruch 4, wobei der Verriegelungsvorsprung (96) eine zur Mittelachse (A-A') konvergierende Form im Querschnitt in der durch die Mittelachse (A-A') verlaufenden axialen Mittelebene, insbesondere eine dreieckige Form, aufweist.

6. Flexible Leitung (10) nach Anspruch 1, wobei die Indexierungsanordnung (27A) einen Hohlraum (70) umfasst, der in der metallischen Zwischenschicht (52) ausgebildet ist, sich der Hohlraum (70) zu dem Gewölbedraht (40) beabstandet von der Mittelachse (A-A') öffnet, und ein Indexierungszwischenglied, umfassend einen Positionierungsvorsprung (50), der an dem oder jedem gewickelten Gewölbedraht (40) gebildet ist oder davon getragen wird, wobei der Positionierungsvorsprung (50) in dem Hohlraum (70) aufgenommen ist, oder ein zwischenliegendes drahtförmiges Glied (80), das in dem Hohlraum (70) und in einer gegenüberliegenden Nut (80) aufgenommen wird, die in dem oder jedem Gewölbedraht (40) ausgebildet ist.

7. Flexible Leitung (10) nach einem der Ansprüche 1 oder 6, wobei die metallische Zwischenschicht (52) durch ein nicht geklammertes Band (54) gebildet ist, das Windungen (56) aufweist, die um die Mittelachse (A-A') gewickelt sind, jede Windung (42) des oder jedes Gewölbedrahts (40) von mindestens einer Windung (56) des Bands (54) getragen wird, und wobei optional der Hohlraum (70) in Bezug auf jede Windung (56) des Bands (54) zentriert ist oder sich in der Nähe eines Rands von mindestens einer Windung (56) des Bands befindet.

8. Flexible Leitung (10) nach Anspruch 7, wobei jede Windung (56) des Bands (54) mindestens einen Seitenrand (58A, 58B) definiert, der von der Mittelachse (A-A') erhaben beabstandet ist, vorteilhafterweise zwei Seitenränder (58A, 58B), die von der Mittelachse (A-A') erhaben beabstandet sind, jede Windung (42) von jedem Gewölbedraht (40) an dem erhabenen Seitenrand (58A, 58B) anliegt, vorteilhafterweise an den erhabenen Seitenrändern (58A, 58B).

9. Flexible Leitung (10) nach einem der Ansprüche 7 oder 8, wobei jede Windung (42) des Bands (54) einen Abschnitt (66B) in Kontakt mit der Außenfläche (21) des inneren Mantels (20) und einen zusätzlichen überlappenden Abschnitt (66A) definiert, der in Anlage an einem Abschnitt (66B) angeordnet ist, der mit Außenfläche (21) des inneren Mantels (20) einer benachbarten Windung (42) in Kontakt ist.

10. Flexible Leitung (10) nach einem der vorherigen Ansprüche, wobei der oder jeder Gewölbedraht (40) einen polygonal geformten Querschnitt, genommen in der axialen Mittelebene, aufweist, insbesondere einen rechteckigen, trapezförmigen oder rautenförmigen Querschnitt.

11. Flexible Leitung (10) nach einem der vorherigen Ansprüche, wobei der innere Mantel (20) einstückig aus einem Polymermaterial gebildet ist oder aus einer inneren Druckhalteschicht und einer äußeren Opferschicht, die mit der inneren Schicht verbunden ist, gebildet ist.

12. Verfahren zur Herstellung einer flexiblen Leitung (10) zum Fluidtransport nach einem der Ansprüche 1 bis 11, umfassend:
- Bereitstellen eines inneren Mantels (20), der innen einen Fluidzirkulationsdurchgang (16) begrenzt, und einer äußeren Oberfläche (21), wobei der Fluidzirkulationsdurchgang (16) eine Mittelachse (A-A') definiert;
- Anordnen einer nicht geklammerten Druckgewölbestruktur (27) um den inneren Mantel (20), umfassend das Wickeln mit kurzer Steigung von mindestens einem metallischen Gewölbedraht (40), indem eine Vielzahl von aufeinanderfolgenden Windungen (42) um die äußere Oberfläche (21) gebildet wird, wobei der oder jeder Gewölbedraht (40) nicht geklammert gewickelt wird;
- Wickeln mindestens einer Zugbewehrungslage (24, 25) um die Druckgewölbestruktur (27);
das Verfahren umfassend das Aufbringen von mindestens einem metallischen Kontaktbereich der Druckgewölbestruktur (27) auf die Außenfläche (21) des inneren Mantels (20), wobei der metallische Kontaktbereich im Schnitt in mindestens einer durch die Mittelachse (A-A') verlaufenden axialen Mittelebene einen inneren Rand parallel zu der Mittelachse (A-A') aufweist,
das Verfahren umfassend eine Indexierung der axialen Position jeder Windung (42) entlang der Mittelachse (A-A') durch eine Indexierungsanordnung (27A), die geeignet ist, um einen Zwischenraum (47) zwischen jedem Paar von benachbarten Windungen (42) beizubehalten,
wobei der metallische Kontaktbereich auf dem oder jedem gewickelten Gewölbedraht (40) definiert ist, die Indexierungsanordnung (27A) umfassend einen Indexierungsvorsprung (50) aufweist, der an dem oder jedem gewickelten Gewölbedraht (40) gebildet ist oder davon getragen wird, wobei der Indexierungsvorsprung (50) in den inneren Mantel (20) eingesetzt ist, oder
wobei das Verfahren das Anbringen mindestens einer metallischen Zwischenschicht (52) auf der Außenfläche (21) des inneren Mantels (20) und dann das Wickeln des oder jedes Gewölbedrahts (40) auf die metallische Zwischenschicht (52) umfasst, die metallische Zwischenschicht (52) den oder jeden Kontaktbereich definiert, der auf die Außenfläche (21) aufgebracht ist, die Indexierungsanordnung (27A) umfassend mindestens einen Indexierungsvorsprung (64), der auf der metallischen Zwischenschicht (52) gebildet ist oder davon getragen wird, wobei der Indexierungsvorsprung (64) in den inneren Mantel (20) eingesetzt ist.

13. Verfahren nach Anspruch 12, wobei der metallische Kontaktbereich auf dem oder jedem gewickelten Gewölbedraht (40) definiert ist, das Verfahren umfassend das Bilden einer Rippe (44) der Indexierungsanordnung (27A) in dem inneren Mantel (20) durch Schrumpfen des oder jedes Gewölbedrahts (40), möglicherweise unter Erhitzen des Gewölbedrahts (40) oder/und des inneren Mantels (20), oder durch Rillen des inneren Mantels (20) zum Bilden einer schraubenförmigen Aufnahme (46) und dann Einsetzen des Gewölbedrahts (40) in die schraubenförmige Aufnahme (46).

14. Verfahren nach Anspruch 12, umfassend das Anbringen mindestens einer metallischen Zwischenschicht (52) auf der Außenfläche (21) des Innenmantels (20) und dann das Wickeln des oder jedes Gewölbedrahts (40) auf die metallische Zwischenschicht (52), wobei die metallische Zwischenschicht (52) den oder jeden auf der Außenfläche (21) aufgebrachten Kontaktbereich definiert.

## Claims

1. A flexible pipe (10) for conveying fluid, including:
- an inner sheath (20), internally defining a passage (16) for fluid circulation, and an external surface (21), the fluid circulation passage (16) defining a central axis (A-A');
- a non-interlocked pressure vault structure (27), disposed around the inner sheath (20), including at least one short-pitch wound metallic vault wire (40) forming a plurality of successive turns (42) around the external surface (21), the or each wound vault wire (40) being non-interlocked;
- at least one traction armor ply (24, 25), wound around the pressure vault structure (27);
wherein the pressure vault structure (27) comprises at least one metallic contact region applied to the external surface (21) of the inner sheath (20), the metallic contact region presenting, in section in at least one median axial plane passing through the central axis (A-A'), an internal edge parallel to the central axis (A-A'),
and wherein the flexible pipe (10) includes an indexing assembly (27A) of the axial position of each turn (42) along the central axis (A-A'), suitable for maintaining a gap (47) between each pair of adjacent turns (42),
**characterized in that** the metallic contact region is defined on the or each wound vault wire (40), the indexing assembly (27A) including an indexing projection (50) formed on or carried by the or each wound vault wire (40), the indexing projection (50) being inserted into the inner sheath (20)
or **in that** the pressure vault structure (27) includes at least one metallic intermediate layer (52), interposed between the or each wound vault wire (40) and the inner sheath (20), the metallic intermediate layer (52) defining the or each contact region applied to the external surface (21), the indexing assembly (27A) including at least one indexing projection (64) formed on or carried by the metallic intermediate layer (52), the indexing projection (64) being inserted into the inner sheath (20).

2. The flexible pipe (10) according to claim 1, wherein the indexing assembly (27A) includes a rib (44) formed in the inner sheath (20), protruding into the gap (47) between at least two successive turns (42) of the vault wire (40) along the central axis (A-A').

3. The flexible pipe (10) according to claim 2, wherein the rib (44) is formed by introducing polymer from the inner sheath (20) into the gap (47) advantageously resulting from a shrink fit of the or each vault wire (40) around the inner sheath (20), possibly with the application of heating or/and pressure or is formed by grooving the external surface (21) of the inner sheath (20).

4. The flexible pipe (10) according to any of the preceding claims, comprising an external band wound around each vault wire (40), the indexing assembly (27A) including a blocking projection (96) protruding from the external band into the gap (47) between at least two adjacent turns (42).

5. The flexible pipe (10) according to claim 4, wherein the blocking projection (96) presents a shape converging towards the central axis (A-A') in section in the median axial plane passing through the central axis (A-A'), in particular a triangular shape.

6. The flexible pipe (10) according to claim 1, wherein the indexing assembly (27A) includes a cavity (70) created in the metallic intermediate layer (52), the cavity (70) opening towards the vault wire (40), away from the central axis (A-A'), and an intermediate indexing member comprising a positioning projection (50) formed on or carried by the or each wound vault wire (40), the positioning projection (50) being received in the cavity (70), or an intermediate filamentary member (80), received in the cavity (70) and in an opposite groove (80) created in each vault wire (40).

7. The flexible pipe (10) according to any of claims 1 or 6, wherein the metallic intermediate layer (52) is formed by a non-interlocked strip (54) presenting turns (56) wound around the central axis (A-A'), each turn (42) of the or each vault wire (40) being carried by at least one turn (56) of the strip (54) and wherein, optionally, the cavity (70) is centered relative to each turn (56) of the strip (54), or is located near an edge of at least one turn (56) of the strip.

8. The flexible pipe (10) according to claim 7, wherein each turn (56) of the strip (54) defines at least one raised lateral edge (58A, 58B) away from the central axis (A-A'), advantageously two raised lateral edges (58A, 58B) away from the central axis (A-A'), each turn (42) of each vault wire (40) abutting against the raised lateral edge (58A, 58B), advantageously against the raised lateral edges (58A, 58B).

9. The flexible pipe (10) according to any of claims 7 or 8, wherein each turn (42) of the strip (54) defines a part (66B) in contact with the external surface (21) of the inner sheath (20), and an additional overlapping part (66A), arranged in support on a part (66B) in contact with the external surface (21) of the inner sheath (20) of an adjacent turn (42).

10. The flexible pipe (10) according to any of the preceding claims, wherein the or each vault wire (40) presents a polygonal section, taken in the median axial plane, in particular a rectangular, trapezoidal, or diamond-shaped section.

11. The flexible pipe (10) according to any of the preceding claims, wherein the inner sheath (20) is formed in one piece from a polymer material, or is formed from an internal pressure-retaining layer, and an external sacrificial layer, bonded to the internal layer.

12. A method for manufacturing a flexible pipe (10) for conveying fluid, according to any of claims 1 to 11,
including:
- providing an inner sheath (20), internally defining a passage (16) for fluid circulation, and an external surface (21), the fluid circulation passage (16) defining a central axis (A-A');
- arranging a non-interlocked pressure vault structure (27) around the inner sheath (20), including the short-pitch winding of at least one metallic vault wire (40) forming a plurality of successive turns (42) around the external surface (21), the or each wound vault wire (40) being non-interlocked;
- winding at least one traction armor ply (24, 25) around the pressure vault structure (27);
the method including the application of at least one metallic contact region of the pressure vault structure (27) on the external surface (21) of the inner sheath (20), the metallic contact region presenting, in section in at least one median axial plane passing through the central axis (A-A'), an internal edge parallel to the central axis (A-A'),
the method including an indexing of the axial position of each turn (42) along the central axis (A-A') by an indexing assembly (27A) suitable for maintaining a gap (47) between each pair of adjacent turns (42),
wherein the metallic contact region is defined on the or each wound vault wire (40), the indexing assembly (27A) including an indexing projection (50) formed on or carried by the or each wound vault wire (40), the indexing projection (50) being inserted into the inner sheath (20), or
wherein the method comprises placing at least one metallic intermediate layer (52) on the external surface (21) of the inner sheath (20), then winding each vault wire (40) on the metallic intermediate layer (52), the metallic intermediate layer (52) defining the or each contact region applied to the external surface (21), the indexing assembly (27A) including at least one indexing projection (64) formed on or carried by the metallic intermediate layer (52), the indexing projection (64) being inserted into the inner sheath (20).

13. The method according to claim 12, wherein the metallic contact region is defined on the or each wound vault wire (40), the method comprising the formation of a rib (44) of the indexing assembly (27A) in the inner sheath (20), by shrink fit of the or each vault wire (40), possibly with heating of the vault wire (40) or/and the inner sheath (20), or by grooving the inner sheath (20) to form a helical housing (46), then by inserting the vault wire (40) into the helical housing (46).

14. The method according to claim 12, comprising placing at least one metallic intermediate layer (52) on the external surface (21) of the inner sheath (20), then winding each vault wire (40) on the metallic intermediate layer (52), the metallic intermediate layer (52) defining the or each contact region applied to the external surface (21).
